# EUROPEAN PATENT SPECIFICATION

(11) **EP 1 475 289 B1**
(45) Date of publication and mention of the grant of the patent: **07.11.2007**
(21) Application number: 04076345.0
(22) Date of filing: 05.05.2004
(51) Int. Cl.: B61B 1/02, E01F 1/00, B65G 69/28

(54) **Border element to be placed between a train and a platform**
Randelement zur Anordnung zwischen einem Zug und einem Bahnsteig
Elément de bordure à être interposé entre une rame et un quai

(30) Priority: 05.05.2003 BE 200300275
(43) Date of publication of application: 10.11.2004
(73) Proprietor: Composite Damping Material N.V. (CDM), 3090 Overijse (BE)
(72) Inventor: Blustain, Yoash, 3090 Overijse (BE); Carels, Patrick, 3090 Overijse (BE)
(74) Representative: Callewaert, Jean

(56) References cited:
- DE-A- 3 909 646
- DE-A- 19 641 800
- GB-A- 2 333 757
- US-A- 1 116 160

## Description

The invention concerns a border element for a platform for a railway, whereby this platform extends at a certain height in relation to the rails of the railway, such that the level of this platform corresponds to the entry height of a train situated on said rails in accordance with the preamble of independent claim 1.

Such a border element is known from EP-A-1 431 154.

More particularly, the invention concerns a border element which is to be fixed on the edge of a gate along a railway. This border element makes sure that the free space between the gate and a train is as small as possible in order to avoid that persons in this free space could get jammed or could hurt themselves.

According to the techniques used at present, a relatively large distance is provided between the edge of a gate and a train which can be situated beside said gate. Thus, there is a risk that persons or objects could get jammed in the space between the gate and the train. Since the position of the train in relation to the gate may always vary, it is not possible to reduce this distance without considerably enlarging the risk that a train may get damaged by making contact with the hard edge of the gate.

American patent US 5 845 580 describes border elements making contact with the train over the entire length of the latter and thus filling the space between the gate and the train. As a result of this contact over the entire length of the train, a large frictional force must be overcome when the train moves along the gate. This may especially cause damage to the train, or to the border elements, when it moves at high speed along the gate.

The invention aims to remedy these disadvantages by introducing a border element which allows to make the distance between the gate and a train very small, whereas this border element nevertheless does not cause any damage to the train when it gets into contact with the latter. Moreover, a person wishing to get in a train can rest on this border element without any problem.

To this aim, said border element has an elastic buffer which is to extend horizontally along the edge of said platform, whereby this buffer has a free end opposite to a platform side which is to be linked up with said platform, whereby the rigidity of this buffer increases as of said free end to said platform side.

Practically, the surface of a vertical section of said buffer decreases between said free end and said platform side, in the sense of the latter.

In an advantageous manner, the free end of said buffer has at least two parallel free edges which extend practically horizontally.

According to a practical embodiment of the border element according to the invention, the rigidity of said buffer in the vertical direction is stronger than its rigidity in the horizontal direction.

In a special manner, the border element comprises fastening means to be mounted on the edge of said platform, whereby these fastening means have a rigid profile which is parallel to said free end and which links up with the buffer, such that the rigidity of the latter near said profile is stronger in the vertical direction than that in the horizontal direction.

Said profile is preferably U-shaped and surrounds said platform side, whereby a first leg of this profile extends on the upper side of the buffer, whereas a second leg of this profile extends on the lower side thereof.

According to a specific embodiment of the border element according to the invention, at least one recess is provided in said free end of the buffer, whereby a bolt extends through the buffer between this recess and said platform side where the bolt is mounted in a detachable manner to said fastening means, whereas the head of this bolt is situated in the recess.

Further, a rigid element is preferably provided which extends in said recess and which is connected to at least a part of the wall surrounding this recess, whereby said bolt extends through the element such that the latter is jammed between the head of said bolt and said wall.

Said fastening means comprise, according to an interesting embodiment of the invention, at least a mounting arm extending crosswise in relation to said rigid profile in order to fix the border element to the platform.

The invention also concerns a method for mounting successive border elements according to the invention to a platform, whereby every border element comprises at least a mounting arm extending crosswise in relation to the border element, whereby the border elements are fixed to the edge of the platform via two fastening points of the corresponding mounting arm, such that the crosscut edges of successive border elements are connected to each other, and whereby the heights of the border elements are adjusted to each other by setting the height of said fastening points.

Other particularities and advantages of the invention will become clear from the following description of a few special embodiments of the invention; this description is given as an example only and does not limit the scope of the claimed protection in any way; the figures of reference used hereafter refer to the accompanying drawings.

Figure 1 is a schematic view in perspective of a first embodiment of a border element according to the invention.

Figure 2 is a schematic view in perspective of a gate onto which border elements according to the invention connected to each other have been mounted.

Figure 3 is a cross section of the border element of figure 1 mounted on a gate.

Figure 4 is a schematic horizontal section of a border element mounted on a platform.

Figure 5 is a schematic cross section of a second embodiment of a border element according to the invention.

Figure 6 is a schematic cross section of a third embodiment of a border element according to the invention.

In the different figures, the same figures of reference refer to identical or analogous elements.

The invention in general concerns a border element which is to be mounted on the edge of a gate whereby the upper side of this border element is preferably situated in the same plane as the upper side of the gate. The presence of the border element makes sure that the free space between the gate and a train standing still beside the gate is as small as possible, such that a person getting on the train cannot get caught between the train and the gate.

Since, for example as a result of a play between the rails and the wheels of the train, the distance between the train and the gate may vary somewhat, there is a possibility that the train will make contact with the border element. As a result, the latter must be made such that the train or the border element will not be damaged due to this contact. When there is nevertheless a contact between the border element and a train riding past the gate, the heat which is thus created as a result of the friction during this contact may not set the border element alight. For, the border element comprises an elastic buffer which is made for example of an elastomer such as rubber.

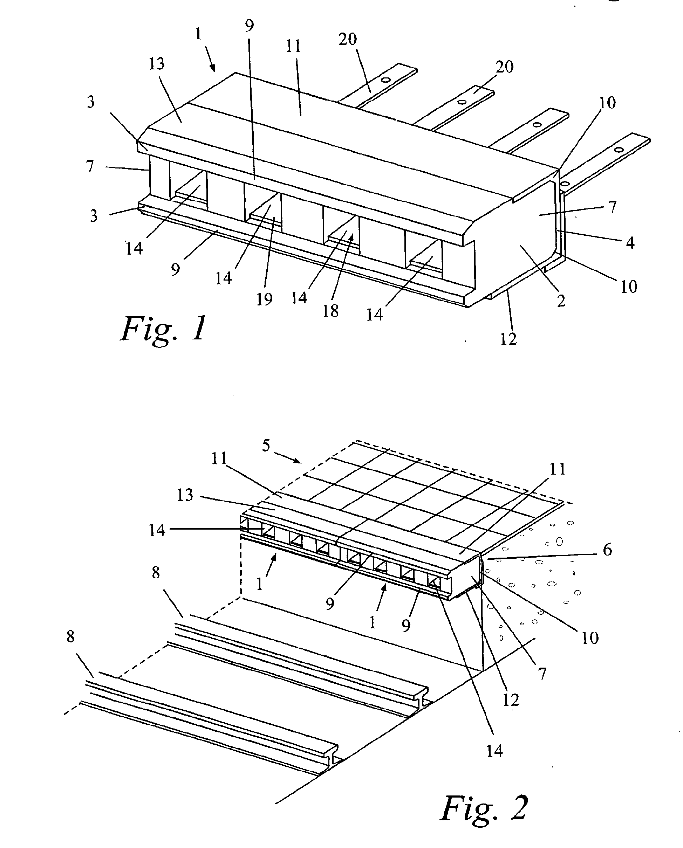

A border element 1 according to a first embodiment of the invention is represented in figure 1. This border element 1 comprises an elastic buffer 2 with a free end 3 and a platform side 4 opposite to the latter which is to link up with a platform onto which the border element 1 is mounted.

The buffer 2 is made of an elastic material such as for example an elastomer. In an advantageous manner, the buffer 2 is made of rubber.

Figure 2 schematically represents a part of a platform 5, in particular a gate, onto which successive border elements 1 have been mounted. These border elements 1 extend along the upper edge 6 of the platform 5, whereby the upper side of the latter and of the border elements 1 are situated in one and the same plane. Thus, these border elements 1 extend according to a horizontal direction, whereby the crosscut edges 7 thereof link up with each other.

Said platform side 4 of the buffer 2 hereby links op with the edge 6 of the platform 5, such that said free end 3 is directed to a train situated on the rails 8 which is not represented in the figures. Said rails run parallel to the edge 6 of the platform 5 at a fixed distance from the latter.

The rigidity of the buffer 2 increases as of said free end 3 to said platform side 4. Hereby is made sure that there is only little space between the free end 3 and said train. This space is for example in the order of magnitude 0.5 to 2 cm, and preferably maximally 3 cm. In this manner is avoided that a person, when getting on the train, would place a foot between the train and the gate 5.

Since, when getting on the train, it is possible to step on the border element 1, this has to be made such that it has only a very small vertical bending under the weight of the person standing on it, in order to prevent this person from loosing his/her balance. Thus, said border element 1 is made such that it will preferably have a maximal bending of 5 mm under a spot load of 200 kg.

Further, the free end 3 of the border element 1, and more particularly of the buffer 2, is suppler than the platform side 4 thereof. This makes sure that when the train makes contact with this free end 3, the latter will be elastically deformed without the train being damaged. With most trains, there is a play in the order of magnitude of 3 to 4 mm between the rails 8 and the wheels of the train.

The maximum horizontal compression of the buffer 2 as a result of the contact with a train is preferably in the order of magnitude of maximally 5 mm. To this end, as already mentioned above, the rigidity of the buffer 2 at the free end 3 is smaller than the rigidity at the platform side 4 thereof.

This is realised for example by making sure that the surface of a vertical section according to the direction of the platform edge 6 of said buffer 2 is smaller than that of the buffer 2 near said platform side 4.

The border element 1 according to the embodiment of the invention, which is represented in figures 1, 2 and 3, has two protruding parallel free edges 9 at said free end 3 which extend almost horizontally. Thus, the buffer 2 is U-shaped, whereby the base of this U forms said platform side 4. A vertical section parallel to said platform edge 6 thus has a smaller section than a corresponding section near said platform side 4.

This makes sure, among other things, that the rigidity of the buffer 2 according to a horizontal direction across the platform edge 6 is smaller than the rigidity of this buffer 2 in a vertical direction.

The buffer is preferably made of an elastomer, such as rubber for example, with a Shore A hardness situated between 50 and 70.

Naturally, it is possible for said free end to have more than two protruding edges 9. Thus, for example three edges can be provided whereby a third edge is provided in the middle between the top and bottom edge, represented in the figures.

In an advantageous manner, the buffer 2 will have a horizontal symmetric plane at least near said free end 3. This makes sure that, when there is a contact between a train passing by and the buffer 2, the latter will be symmetrically loaded in a symmetrical manner.

In order to make sure, however, that the top protruding edge 9 of the buffer 2 has a larger thickness than that of the other protruding edge 9. Thus is avoided that this top edge 9 would bend when a person leans on the latter edge.

Further, the border element has fastening means for mounting it on said edge 6 of the platform 5. These fastening means comprise a rigid profile 10 which is parallel to said free end 3 and which links up with the buffer 2. Thus, this profile 10 makes sure that the rigidity of the buffer 2, in the vicinity of the latter, is larger in the vertical direction than that in the horizontal direction.

The profile 10 is made U-shaped and surrounds the platform side 4 of the buffer 2. This profile 10 is hereby provided with two legs 11 and 12, whereby a first leg 11 of this profile 10 extends on the upper side of the buffer 2, whereas a second leg 12 of this profile 10 links up with the lower side thereof. The latter leg 12 is somewhat longer than the first leg 11 and makes sure that the bending of the buffer 2 in the vertical direction is negligible when a person is standing on the buffer.

The first leg 11 is countersunk in the upper surface 13 of the buffer 2, such that the upper side of the platform 5 and the border element 1 are situated in one and the same almost level plane.

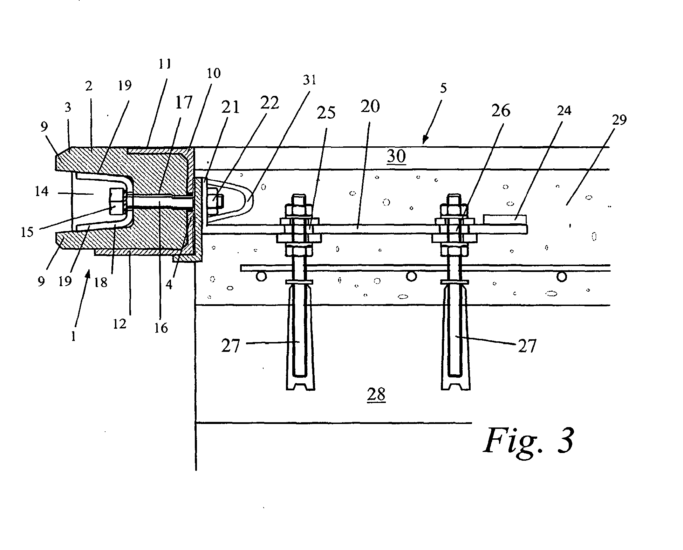

Further, in the buffer 2 on the side of the free end 3, between said free edges 9, are provided recesses 14. Figure 3 represents such a recess 14 in detail. In this recess 14 is situated the head 15 of a bolt 16 which extends in a bore 17 through the buffer 2 between the recess 14 and the platform side of the buffer 2. The buffer 2 is fixed in said rigid profile 10 by means of this bolt 16.

Between the head 15 of said bolt 16 and the wall forming the recess 14 is provided a rigid element 18. This rigid element 18 extends in said recess and links up with at least a part of the wall surrounding the recess 14. The bolt hereby goes through the element 18, such that the latter is jammed between the head 15 of the bolt 16 and said wall.

This rigid element 18 consists of a U-shaped metal profile whose legs 19 extend above and under said head 15 along the walls of the recess 14. Thus, this rigid element 18 makes sure that the rigidity is enlarged in the vertical direction of the buffer, and that the vertical bending of the buffer 2 is very small when it is loaded in the vertical direction.

However, the presence of this element 18 has no or only a very small influence on the rigidity of the buffer 2 in a horizontal direction across said platform edge 6.

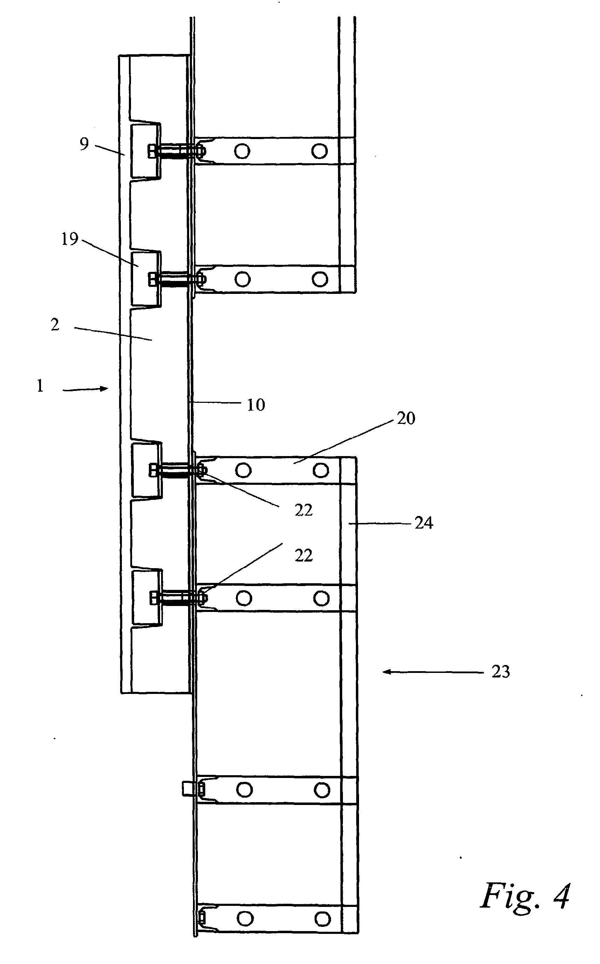

The fastening means further comprise mounting arms 20 which extend across said rigid profile 10 in order to fasten the border element 1 to the platform 5, as is schematically represented in figure 4. Every mounting arm 20 is formed of a metal lath which has a cross flange 21 at the far end, which is to link up with said rigid profile 10, onto which is fixed a nut 22 by means of a weld for example.

Thus, the mounting arms 19 are fixed against said rigid profile 10 by placing them with said flange 21 against the latter opposite to said recess 14, whereby the corresponding bolt 16 is tightened in the nut 22.

Said mounting arms 20 are preferably connected to each other in order to form a frame 23 which comprises for example four mounting arms 20 connected to each other at their far ends opposite to said flange 21 via a metal lath 24.

In order to connect successive border elements 1 to each other, such that their respective crosscut edges 7 link up with each other, whereby the corresponding upper surfaces 13 thereof are situated in one and the same plane, one and the same frame 23 is connected to two successive border elements 1. More particularly, two mounting arms 20 of the frame 23 situated next to each other are fixed to a first border element 1, whereas the two other mounting arms 20, also situated next to each other, are mounted to a following border element 1.

Further, every mounting arm 20 has two fastening points 25 and 26 via which the mounting arm is fixed to the platform 5. These fastening points 25 and 26 are formed, among others, of a circular recess through which a respective bolt 27 extends which, in a manner known as such, is anchored in the concrete supporting structure 28 of the platform 5. Hereby is made sure that said rigid profile 10 links up to the platform edge 6, whereby the level of the top surface 13 of the border element 1 corresponds to that of the level of the platform 5. In order to set the level of this border element 1, the height of each of the fastening points 25 and 26 is adjusted in relation to said supporting structure 28.

After successive border elements 1 which thus link up and which are situated in each other's prolongation have been fixed to the platform 5, concrete 29 is cast on said supporting structure 28 in order to anchor the border elements 1 in the platform 5 via de mounting arms 20. On this cast concrete 29 is then provided a floor covering 30, such that the upper side of the platform 5 is situated in practically the same plane as the upper side 13 of the border element 1.

Said nuts 22 which are provided on the mounting arms 20 are preferably screened by a cap 31 which makes sure that when said concrete 29 is being cast, there is a free space between the far end of the bolts 16 and the concrete 29. This makes it possible to somewhat tighten the bolts 16, for example, after the cast concrete 29 has hardened, or to release the buffer 2 together with said rigid profile 10 of a damaged border element 1, and to replace it by a new buffer 2 with a rigid profile 10.

Said cap 31 can for example be made of plastic, or it can be formed by applying a synthetic foam on the far end of the bolt 16.

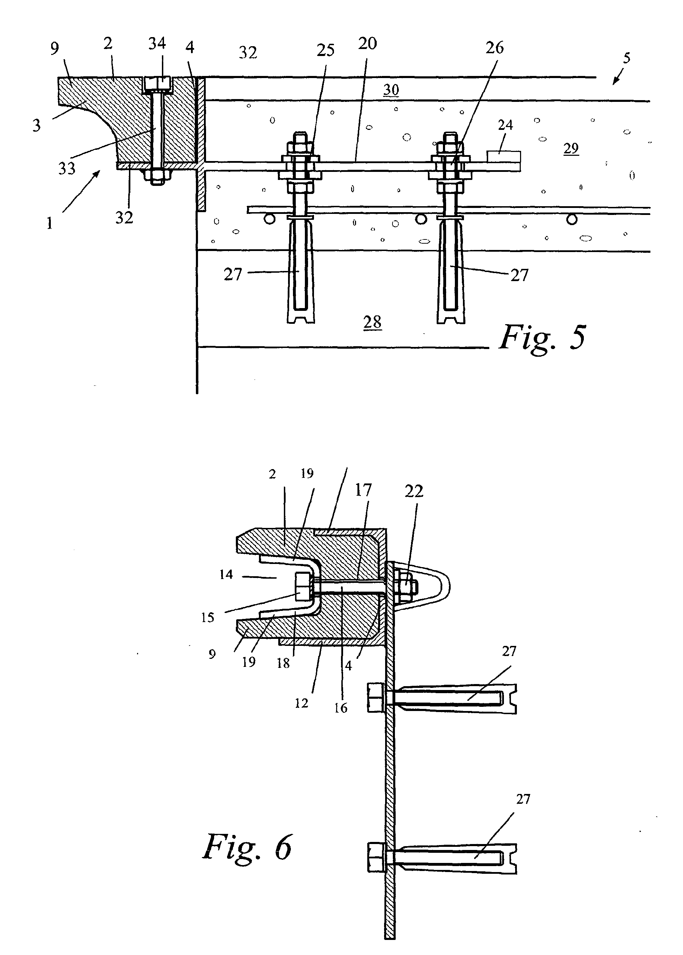

Figure 5 represents a second embodiment of the border element 1 according to the invention, whereby the buffer 2 has only one protruding edge 9 on the free end 3 thereof. Further, an L-shaped rigid profile 32 extends between the platform side 4 of the buffer 2 and the platform edge 6, and it links up with the buffer 2 at the bottom.

The buffer 2 is mounted on the profile 32 via a vertical bolt 33 whose head 34 is countersunk in the upper surface of the buffer 13.

Further, mounting arms 20 are provided in order to anchor the border element 1 in the platform 5.

Yet another embodiment of the border element 1 according to the invention is represented in figure 6. This border element 1 is different from the one represented in figures 1 to 4 in that said mounting arms 20 extend vertically, so that it can be fixed against the lateral wall of the platform 5.

Naturally, the invention is not restricted to the above-described embodiments of the border element according to the invention represented in the accompanying drawings. Thus, it is for example possible that it is provided with only one recess 14 in the free end 3 extending over the entire length of the border element 1, whereby said rigid element also extends over this entire length.

Nor must the rigid element necessarily have a U―shaped cross section, but this element may for example also consist of a washer plate.

## Claims

1. Border element for a platform (5) for a railway, whereby this platform (5) extends at a certain height in relation to the rails (8) of the railway, such that the level of this platform (5) corresponds to the entry height of a train situated on said rails (8), whereby this border element has an elastic buffer (2) which is to extend horizontally according to the edge (6) of said platform (5), whereby this buffer (2) has a free end (3) opposite to a platform side (4) which is to link up with said platform (5), whereby the rigidity of this buffer (2) increases as of said free end (3) to said platform side (4) **characterised in that** the rigidity of the buffer (2) is larger in the vertical direction than its rigidity in the horizontal direction.

2. Border element according to claim 1, **characterised in that** the surface of successive vertical sections of said buffer (2), parallel to said free end (3), increases as of the latter to said platform side (4).

3. Border element according to claim 1 or 2, **characterised in that** the free end (3) of said buffer (2) has at least two parallel free edges (9) which extend almost horizontally.

4. Border element according to any of claims 1 to 3, **characterised in that** said buffer (2), at least near the free end (3), has a horizontal symmetric plane.

5. Border element according to any of claims 1 to 4, **characterised in that** it comprises fastening means (10,16,20) to be mounted on the edge (6) of said platform (5), whereby these fastening means (10,16,20) have a rigid profile (10, 32) and/or a rigid element (18) such that the rigidity of the buffer (2), in the vicinity of the latter, is larger in the vertical direction than that in the horizontal direction.

6. Border element according to any of claims 1 to 5, **characterised in that** it comprises fastening means (10,16,20) to be mounted on the edge (6) of said platform (5), whereby these fastening means (10,16,20) have a rigid profile (10) which is parallel to said free end (3) and which links up with the buffer (2), such that the rigidity of the latter, near said profile (10), is stronger in the vertical direction than that in the horizontal direction.

7. Border element according to claim 6, **characterised in that** said profile (10) is U-shaped and surrounds said platform side (4), whereby a first leg (11) of this profile extends at the upper side (13) of the buffer (2), whereas a second leg (12) of this profile (10) extends on the lower side thereof.

8. Border element according to claim 7, **characterised in that** said first leg (11) of said profile (10) is countersunk in the upper side (13) of the buffer (2).

9. Border element according to any of claims 6 tot 8, **characterised in that** at least one recess (14) is provided in said free end (3) of the buffer (2), whereby a bolt (16) extends through the buffer (2) between this recess (14) and said platform side (4) where the bolt (16) is mounted to said fastening means in a detachable manner, whereas the head (15) of this bolt (16) is situated in the recess (14).

10. Border element according to claim 9, **characterised in that** a rigid element (18) is provided which extends in said recess (14) and which links up with at least a part of the wall surrounding this recess (14), whereby said bolt (16) extends through the element (18), such that the latter is jammed between the head (15) of said bolt (16) and said wall.

11. Border element according to claim 10, **characterised in that** said rigid element (18) consists of a U-shaped metal profile which extends horizontally in said recess (14).

12. Border element according to any of claims 6 to 11, **characterised in that** said fastening means comprise at least a mounting arm (20) extending crosswise in relation to said rigid profile (10) in order to fix the border element (1) to the platform (5).

13. Border element according to claim 12, **characterised in that** said mounting arm (20) has at least two fastening points (25,26), whereby the level of at least one of these fastening points (25,26) can be freely adjusted in order to fix the border element (1) practically horizontally to the platform (5), whereby the upper side of the platform (5) is situated practically in the same plane as the upper side of the border element (1).

14. Method for mounting successive border elements (1) according to any of claims 1 to 13 to a platform, whereby every border element (1) comprises at least one mounting arm (20) extending crosswise in relation to the border element (1), whereby the border elements (1) are fixed to the edge (6) of the platform (5) via preferably at least two fastening points (25,26) of the corresponding mounting arm (20), such that the crosscut edges (7) of successive border elements (1) link up with each other, and whereby the heights of the border elements (1) are adjusted to one another by setting the height of said fastening points (25,26).

15. Method according to claim 14, **characterised in that** concrete (29) is cast on said platform (5) in order to anchor said mounting arms (20), whereby a floor covering (30) may be provided on this concrete (29), such that the upper side of the platform (5) is situated in practically the same plane as the upper side (13) of the border element (1).

16. Platform for a train pick-up point, whereby this platform (5) is situated at an entry height in relation to a train, such that train passengers can get in the train via this platform (5), whereby the border element (1) according to any of claims 1 to 13 is provided on the edge (6) of this platform (5) extending beside the train, such that the upper side of this border element (1) extends in the plane of the platform (5) and links up with it.

## Patentansprüche

1. Randelement für einen Bahnsteig (5) für eine Eisenbahn, wobei sich dieser Bahnsteig (5) im Verhältnis zu den Schienen (8) der Eisenbahn in einer bestimmten Höhe erstreckt, so dass das Niveau dieses Bahnsteigs (5) der Einstiegshöhe eines auf den Schienen (8) stehenden Zuges entspricht, wobei dieses Randelement einen elastischen Puffer (2) besitzt, der sich horizontal an der Kante (6) des Bahnsteigs (5) erstrecken soll, wobei dieser Puffer (2) ein freies Ende (3) gegenüber einer Bahnsteigseite (4) aufweist, die mit dem Bahnsteig (5) in verbindung treten soll, wobei die Festigkeit dieses Puffers (2) vom freien Ende (3) zur Bahnsteigseite (4) zunimmt, **dadurch gekennzeichnet, dass** die Festigkeit des Puffers (2) in vertikaler Richtung größer ist als seine Festigkeit in horizontaler Richtung.

2. Randelement gemäß Anspruch 1, **dadurch gekennzeichnet, dass** die Fläche aufeinander folgender vertikaler Querschnitte des Puffers (2) parallel zum freien Ende (3) von diesem zur Bahnsteigseite (4) zunimmt.

3. Randelement gemäß Anspruch 1 oder 2, **dadurch gekennzeichnet, dass** das freie Ende (3) des Puffers (2) mindestens zwei parallele, freie Kanten (9) aufweist, die sich beinahe horizontal erstrecken.

4. Randelement gemäß einem der Ansprüche 1 bis 3, **dadurch gekennzeichnet, dass** der Puffer (2) zumindest nahe dem freien Ende (3) eine horizontal symmetrische Ebene aufweist.

5. Randelement gemäß einem der Ansprüche 1 bis 4, **dadurch gekennzeichnet, dass** es Befestigungsmittel (10, 16, 20) umfasst, die an der Kante (6) des Bahnsteigs (5) montiert werden, wobei diese Befestigungsmittel (10, 16, 20) ein starres Profil (10, 32) und/oder ein starres Element (18) aufweisen, so dass die Festigkeit des Puffers (2) in der Nähe des letzteren in vertikaler Richtung größer ist als in horizontaler Richtung.

6. Randelement gemäß einem der Ansprüche 1 bis 5, **dadurch gekennzeichnet, dass** es Befestigungsmittel (10, 16, 20) umfasst, die an der Kante (6) des Bahnsteigs (5) montiert werden, wobei diese Befestigungsmittel (10, 16, 20) ein starres Profil (10) besitzen, das parallel zum freien Ende (3) ist und mit dem Puffer (2) eine Verbindung eingeht, so dass die Festigkeit des letzteren nahe dem Profil (10) in vertikaler Richtung höher ist als die in horizontaler Richtung.

7. Randelement gemäß Anspruch 6, **dadurch gekennzeichnet, dass** das Profil (10) U-förmig ist und die Bahnsteigseite (4) umgibt, wobei sich ein erstes Bein (11) dieses Profils an der Oberseite (13) des Puffers (2) erstreckt, während sich ein zweites Bein (12) dieses Profils (10) an der Unterseite desselben erstreckt.

8. Randelement gemäß Anspruch 7, **dadurch gekennzeichnet, dass** das erste Bein (11) des Profils (10) in der Oberseite (13) des Puffers (2) versenkt ist.

9. Randelement gemäß einem der Ansprüche 6 bis 8, **dadurch gekennzeichnet, dass** mindestens eine Vertiefung (14) im freien Ende (3) des Puffers (2) vorgesehen ist, wobei sich ein Bolzen (16) durch den Puffer (2) zwischen dieser Vertiefung (14) und der Bahnsteigseite (4) erstreckt, wo der Bolzen (16) am Befestigungsmittel lösbar montiert ist, während der Kopf (15) dieses Bolzens (16) in der Vertiefung (14) angeordnet ist.

10. Randelement gemäß Anspruch 9, **dadurch gekennzeichnet, dass** ein starres Element (18) vorgesehen ist, das sich in der Vertiefung (14) erstreckt und eine Verbindung mit zumindest einem Teil der diese Vertiefung (14) umgebenden Wand eingeht, wobei sich der Bolzen (16) durch das Element (18) erstreckt, so dass letzteres zwischen dem Kopf (15) des Bolzen (16) und der Wand eingeklemmt ist.

11. Randelement gemäß Anspruch 10, **dadurch gekennzeichnet, dass** das starre Element (18) aus einem U-förmigen Metallprofil besteht, das sich horizontal in der vertiefung (14) erstreckt.

12. Randelement gemäß einem der Ansprüche 6 bis 11, **dadurch gekennzeichnet, dass** die Befestigungsmittel mindestens einen Montagearm (20) besitzen, der sich kreuzweise im Verhältnis zum starren Profil (10) erstreckt, um das Randelement (1) am Bahnsteig (5) zu befestigen.

13. Randelement gemäß Anspruch 12, **dadurch gekennzeichnet, dass** der Montagearm (20) mindestens zwei Befestigungspunkte (25, 26) besitzt, wobei das Niveau mindestens eines dieser Befestigungspunkte (25, 26) frei angepasst werden kann, um das Randelement (1) praktisch horizontal am Bahnsteig (5) zu befestigen, wobei die Oberseite des Bahnsteigs (5) praktisch in der selben Ebene angeordnet ist wie die Oberseite des Randelements (1).

14. Verfahren zur Montage aufeinander folgender Randelemente (1) gemäß einem der Ansprüche 1 bis 13 an einem Bahnsteig, wobei jedes Randelement (1) mindestens einen Montagearm (20) umfasst, der sich quer zum Randelement (1) erstreckt, wobei die Randelemente (1) an der Kante (6) des Bahnsteigs (5) mittels vorzugsweise mindestens zwei Befestigungspunkten (25, 26) des entsprechenden Montagearme (20) befestigt werden, so dass sich die Querschnittsenden (7) aufeinander folgender Randelemente (1) miteinander verbinden, und wobei die Höhen der Randelemente (1) aneinander angepasst werden, indem die Höhe der Befestigungspunkte (25, 26) eingestellt wird.

15. Verfahren gemäß Anspruch 14, **dadurch gekennzeichnet, dass** Beton (29) auf den Bahnsteig (5) gegossen wird, um die Montagearme (20) zu verankern, wobei auf diesen Beton (29) eine Bodendecke (30) gelegt werden kann, so dass die Oberseite des Bahnsteigs (5) in praktisch der selben Ebene angeordnet ist wie die Oberseite (13) des Randelements (1).

16. Bahnsteig für einen Zug-Abholpunkt, wobei der Bahnsteig (5) auf einer Einstiegshöhe im Verhältnis zu einem Zug angeordnet ist, so dass die Zugpassagiere über diesen Bahnsteig (S) in den Zug gelangen können, wobei das Randelement (1) gemäß einem der Ansprüche 1 bis 13 auf der Kante (6) dieses neben dem Zug verlaufenden Bahnsteigs (5) vorgesehen ist, so dass sich die Oberseite des Randelements (1) in der Ebene des Bahnsteigs (5) erstreckt und eine Verbindung mit diesem eingeht.

## Revendications

1. Elément de bordure pour un quai (5) pour une voie ferrée, par lequel ledit quai (5) s'étend à une certaine hauteur par rapport aux rails (8) de la voie ferrée, de telle sorte que le niveau dudit quai (5) corresponde à la hauteur d'entrée d'une rame se trouvant sur lesdits rails (8), dans lequel ledit élément de bordure comprend un tampon élastique (2) qui s'étend horizontalement suivant le bord (6) dudit quai (5), dans lequel ledit tampon (2) présente une extrémité libre (3) opposée à un côté du quai (4) qui doit être rattachée audit quai (5), dans lequel la rigidité dudit tampon (2) augmente avec celle de ladite extrémité libre (3) audit côté du quai (4), **caractérisé en ce que** la rigidité du tampon (2) est supérieure dans la direction verticale à sa rigidité dans la direction horizontale.

2. Elément de bordure selon la revendication 1, **caractérisé en ce que** la surface de sections verticales successives dudit tampon (2), parallèles à ladite extrémité libre (3), augmente avec celle de cette dernière audit côté du quai (4).

3. Elément de bordure selon la revendication 1 ou la revendication 2, **caractérisé en ce que** l'extrémité libre (3) dudit tampon (2) comporte au moins deux bords libres parallèles (9) qui s'étendent pratiquement horizontalement.

4. Elément de bordure selon l'une quelconque des revendications 1 à 3, **caractérisé en ce que** ledit tampon (2), au moins à proximité de l'extrémité libre (3), présente un plan de symétrie horizontal.

5. Elément de bordure selon l'une quelconque des revendications 1 à 4, **caractérisé en ce qu'**il comprend des moyens de fixation (10, 16, 20) à monter sur le bord (6) dudit quai (5),
dans lequel lesdits moyens de fixation (10, 16, 20) présentent un profil rigide (10, 32) et/ou un élément rigide (18), de telle sorte que la rigidité du tampon (2), dans le voisinage de ce dernier, soit plus haute dans la direction verticale que dans la direction horizontale.

6. Elément de bordure selon l'une quelconque des revendications 1 à 5, **caractérisé en ce qu'**il comprend des moyens de fixation (10, 16, 20) à monter sur le bord (6) dudit quai (5), dans lequel lesdits moyens de fixation (10, 16, 20) présentent un profil rigide (10) qui est parallèle à ladite extrémité libre (3) et qui se rattache au tampon (2), de telle sorte que la rigidité de ce dernier, à proximité dudit profil (10), soit plus haute dans la direction verticale que dans la direction horizontale.

7. Elément de bordure selon la revendication 6, **caractérisé en ce que** ledit profil (10) est en forme de U et entoure ledit côté du quai (4), dans lequel une première branche (11) dudit profil s'étend au côté supérieur (13) du tampon (2), tandis qu'une deuxième branche (12) dudit profil (10) s'étend sur le côté inférieur de celui-ci.

8. Elément de bordure selon la revendication 7, **caractérisé en ce que** ladite première branche (11) dudit profil (10) est fraisée dans le côté supérieur (13) du tampon (2).

9. Elément de bordure selon l'une quelconque des revendications 6 à 8, **caractérisé en ce qu'**au moins un évidement (14) est formé dans ladite extrémité libre (3) du tampon (2), dans lequel un boulon (16) s'étend à travers le tampon (2) entre cet évidement (14) et ledit côté du quai (4), où le boulon (16) est monté sur lesdits moyens de fixation d'une façon détachable, tandis que la tête (15) dudit boulon (16) est située dans l'évidement (14).

10. Elément de bordure selon la revendication 9, **caractérisé en ce qu'**il est prévu un élément rigide (18) qui s'étend dans ledit évidement (14), et se rattache à au moins une partie de la paroi qui entoure ledit évidement (14), dans lequel ledit boulon (16) s'étend à travers l'élément (18), de telle sorte que ce dernier soit coincé entre la tête (15) dudit boulon (16) et ladite paroi.

11. Elément de bordure selon la revendication 10, **caractérisé en ce que** ledit élément rigide (18) est constitué d'un profil métallique en forme de U qui s'étend horizontalement dans ledit évidement (14).

12. Elément de bordure selon l'une quelconque des revendications 6 à 11, **caractérisé en ce que** lesdits moyens de fixation comprennent au moins un bras de montage (20) s'étendant transversalement par rapport audit profil rigide (10) dans le but de fixer l'élément de bordure (1) au quai (5).

13. Elément de bordure selon la revendication 12, **caractérisé en ce que** ledit bras de montage (20) comprend au moins deux points de fixation (25, 26), dans lequel le niveau d'au moins un desdits points de fixation (25, 26) peut être réglé librement dans le but de fixer l'élément de bordure (1) pratiquement horizontalement au quai (5), dans lequel le côté supérieur du quai (5) est situé pratiquement dans le même plan que le côté supérieur de l'élément de bordure (1).

14. Procédé pour monter des éléments de bordure successifs (1) selon l'une quelconque des revendications 1 à 13 sur un quai, dans lequel chaque élément de bordure (1) comprend au moins un bras de montage (20) s'étendant transversalement par rapport à l'élément de bordure (1), dans lequel les éléments de bordure (1) sont fixés au bord (6) du quai (5) de préférence par l'intermédiaire d'au moins deux points de fixation (25, 26) du bras de montage correspondant (20), de telle sorte que les bords coupés transversalement (7) des éléments de bordure successifs (1) se rattachent les uns aux autres, et dans lequel les hauteurs des éléments de bordure (1) sont réglées les unes par rapport aux autres en réglant la hauteur desdits points de fixation (25, 26).

15. Procédé selon la revendication 14, **caractérisé en ce que** du béton (29) est coulé sur ledit quai (5) dans le but d'ancrer lesdits bras de montage (20), dans lequel un revêtement de sol (30) peut être posé sur ledit béton (29), de telle sorte que le côté supérieur du quai (5) soit situé pratiquement dans le même plan que le côté supérieur (13) de l'élément de bordure (1).

16. Quai pour un point de prise de rame, dans lequel ledit quai (5) est situé à une hauteur d'entrée par rapport à une rame, de telle sorte que les passagers de la rame puissent monter dans la rame en empruntant ledit quai (5), dans lequel l'élément de bordure (1) selon l'une quelconque des revendications 1 à 13 est monté sur le bord (6) dudit quai (5) s'étendant le long de la rame, de telle sorte que le côté supérieur dudit élément de bordure (1) s'étende dans le plan du quai (5) et se rattache à celui-ci.
